# EUROPEAN PATENT SPECIFICATION

(11) **EP 4 194 727 B1**
(45) Date of publication and mention of the grant of the patent: **16.07.2025**
(21) Application number: 21213029.8
(22) Date of filing: 08.12.2021
(51) Int. Cl.: F16K 15/06, F16K 47/08, F16K 1/42, F16K 17/04

(54) **SHOCK-VALVE**
STOSSDÄMPFERVENTIL
SOUPAPE ANTICHOCS

(43) Date of publication of application: 14.06.2023
(73) Proprietor: Danfoss Power Solutions ApS, 6430 Nordborg (DK)
(72) Inventor: Jørgensen, Martin Raadkjær, 6430 Nordborg (DK); Winter, Michael, 6430 Nordborg (DK); Petersen, Ken, 6430 Nordborg (DK)
(74) Representative: Keil & Schaafhausen Patentanwälte PartGmbB

(56) References cited:
- WO-A1-2015/143845
- CN-A- 103 836 211
- DE-A1- 102010 043 622
- DE-A1- 3 929 094
- US-A1- 2007 267 068
- US-A1- 2009 293 519

## Description

The present invention relates to a shock-valve comprising a housing having an inlet connected to a chamber and an outlet, a valve seat section having a valve seat and being arranged in the housing, a valve element cooperating with the valve seat, and biasing means acting on the valve element in a direction towards the valve seat, wherein a channel arrangement extends from the chamber to the valve seat.

Such a shock-valve is used to avoid an overpressure spike in a hydraulic system, for example, in a hydraulic steering system. Such an overpressure spike could occur, when the steered wheels of a vehicle hit against an obstacle and are moved against the force of a steering motor. Such a shock-valve can, however, be used in other systems as well.

A shock valve according to the preamble of claim 1 is known from US 2007/267068 A1.

WO 2015/143845 A1 discloses a valve base assembly for electronic expansion valves comprising a housing having an inlet connected to a chamber and an outlet, a valve seat section having a valve seat and being arranged in the housing, a valve element cooperating with the valve seat and a channel arrangement extending from the chamber to the valve seat, wherein the channel arrangement forms an odd number of flow paths larger than two.

DE 39 29 094 A1 discloses a hydraulic pressure relief valve and DE 102010 043 622 A1 teaches a proportional valve for controlling a gaseous medium. Further, CN 103 836 211 A describes a valve seat assembly of an electronic expansion valve and a manufacturing method of valve seat assembly. Another expansion valve is known from US 2009/293519 A1.

A problem of a shock-valve is that it produces a considerable noise during operation. Such a noise can be disturbing.

The object underlying the invention is to provide a shock-valve having low noise during operation.

This object is solved with a shock-valve according to claim 1.

It comprises a housing having an inlet connected to a chamber and an outlet, a valve seat section having a valve seat and being arranged in the housing, a valve element cooperating with the valve seat, and biasing means acting on the valve element in a direction towards the valve seat, wherein a channel arrangement extends from the chamber to the valve seat, wherein the valve seat section is formed in a valve seat element arranged between the inlet and the outlet. The channel arrangement forms an odd number of flow paths larger than two. The channel arrangement comprises a number of bores in the valve seat element, wherein the flow paths extend through the bores, wherein the shock-valve is configured such that fluid from the chamber can propagate through the bores into a cavity, wherein a pressure of the fluid in the cavity acts on the valve element and when a force onto the valve element exceeds a force produced by the biasing means, the valve element is moved away from the valve seat of the valve seat element, wherein the shock-valve opens until the pressure has been released to an acceptable magnitude, wherein the biasing means move the valve element back to contact the valve seat thereafter.

Shock-valves presently available always have an even number of flow paths.

In an embodiment of the invention the number of flow paths is three, five or seven. Such a number of flow paths allows for a uniform distribution of the flows through the gap between the valve element and the valve seat.

The valve seat section is formed in a valve seat element arranged between the inlet and the outlet. When the valve seat section is formed in a valve seat element, the valve seat can be produced independently from the housing and there is a larger degree of freedom when designing the valve seat and the environment of the valve seat. This allows for a design of the flow paths producing low noise during operation.

In an embodiment of the invention the valve seat element comprises the central cavity, wherein the valve seat is formed at an edge of the cavity, and the flow paths open into the cavity. In this way it is possible to arrange the flow paths in a way that the flow of hydraulic fluid does not produce too much noise.

In an embodiment of the invention the cavity comprises a central axis and the flow paths are directed towards the central axis. In other words, the flow paths are directed radially inwardly.

In an embodiment of the invention a wall section of the cavity is arranged opposite to an opening of at least one flow path into the cavity. In this way a flow of hydraulic fluid through this flow path cannot be directed into an opposite opening of another flow path.

In an embodiment of the invention a wall section of the cavity is arranged opposite to each opening of the flow path. Thus, there is no opening of a flow path directly opposite an opening of another flow path. Thus, it is not possible that the flow of hydraulic fluid can favour one opening of the flow paths over others with the consequence that the fluid is forced to flow to the outlet of the housing in a more laminar manner.

In an embodiment of the invention the valve seat element is allowed to rotate in the chamber. The valve seat element is not fixed against rotation.

According to the invention, the channel arrangement comprises a number of bores in the valve seat element, wherein the flow paths extend through the bores. The bores form a defined flow path in which the flow of the hydraulic fluid is as laminar as possible.

In an embodiment of the invention the valve seat element comprises for each bore a flattened section in a circumferential outer wall of the valve seat element and the bore extends from the respective flattened section. The flattened section forms a border of a kind of inlet area for the bore, in which the fluid can spread.

In an embodiment of the invention in circumferential direction each flattened section extends over more than twice the largest diameter of the respective channel. This means that the gap between the valve seat element and the housing is large enough to allow a spreading of the fluid contributing to a laminar flow of the fluid.

In an embodiment of the invention the valve seat element, the valve element and the biasing means form a unit that can be handled together. The valve seat element, the valve element and the biasing means, for example, a spring, can be mounted to form the unit, wherein the unit is then inserted into the chamber of the housing.

In an embodiment of the invention the valve element comprises a stem penetrating the valve seat element. This is a simple way to keep the three elements valve seat element, valve element and biasing means together.

A preferred embodiment of the invention will now be described with reference to the drawing, in which:
- Fig. 1: shows a schematic sectional view of a shock-valve,
- Fig. 2: shows a sectional view along line II-II of Fig. 1,
- Fig. 3: shows a sectional view of a unit of valve seat element, valve element and biasing means,
- Fig. 4: shows a perspective view of this unit,
- Fig. 5: shows a flow situation in a conventional shock-valve, and
- Fig. 6: shows the flow situation in a shock-valve according to the present invention.

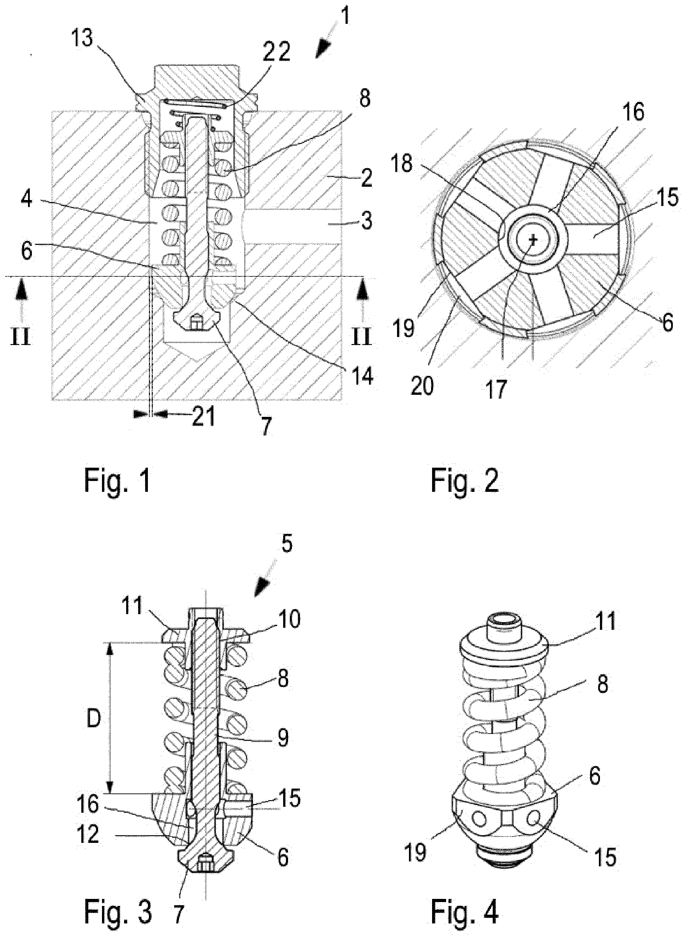

Fig. 1 schematically shows a shock-valve 1 having a housing 2. The housing comprises an inlet 3 opening into a chamber 4. The shock-valve 1 comprises furthermore an outlet which is not visible in Fig. 1.

A unit 5 comprising a valve seat element 6, a valve element 7 and biasing means 8 in form of a spring is arranged in the chamber 4 of the housing 2. The valve seat element 6 forms a valve element section. The biasing means 8 can be in form of a spring.

The valve element 7 is connected to a stem 9. The stem 9 comprises an outer thread 10 at an end remote from the valve element 7. A nut 11 is threaded onto the outer thread 10. The biasing element 8 is pretensioned between the nut 11 and the valve seat element 6. A distance D between the nut 11 and the valve seat element 6 determines the force with which the biasing element 8 presses the valve element 7 against the valve seat element 6.

The valve seat element 6 comprises a valve seat 12. The valve element 7 cooperates with the valve seat 12. In the condition shown in Fig. 1 and 3, the valve element 7 contacts the valve seat 12 and the shock-valve 1 of Fig. 1 is closed.

The chamber 4 is sealed to the outside by means of a plug 13 which can be threaded into the housing 2. The valve seat element 6 is pressed against a step 14 of the housing 2 by the pressure at the inlet 3 of the chamber 4. Furthermore, the unit 5 is kept seated between the plug13 and the step 14 of the housing 2 by means of a spring 22. This spring 22 has a conical form, i.e. it comprises a diameter which increases from the nut 11 towards the plug13. The spring 22 provides a small compression between the plug13 and the step 14. It aids assembly due to the interference fit between the spring 22 and the nut 11.

The valve seat element 6 comprises an odd number of bores 15, distributed evenly in circumferential direction. Each bore 15 forms a channel, so that the bores 15 together form a channel arrangement. The channel arrangement defines a number of flow paths from the chamber 4 to the valve seat 12. To this end the valve seat element comprises a cavity 16 through which the stem 9 of the valve element 7 is guided. The cavity 16 comprises a central axis 17 and the flow paths through the bores 15 are directed towards the central axis 17. The valve seat 12 is formed at an edge of the cavity 16.

Since the bores 15 are evenly distributed in circumferential direction, a wall section 18 of the cavity is arranged opposite to the openings of the bores 15 into the cavity 16. In other words, it is not possible that a flow coming from one bore enters directly the opening of another bore. To the contrary, it hits the wall section 18 of the circumferential wall of the cavity 16.

As mentioned above, the valve seat element 6 is not mechanically fixed in the housing 2 only by the force of the conical spring 22 and by the pressure in the chamber 4. There is a small gap 21 between the valve seat element 6 and the housing 2 in radial direction (related to the central axis 17). This means also that the valve seat element 6 can freely rotate in the chamber 4.

As can be seen in Fig. 2 and 4, the valve seat element 6 comprises for each bore 15 a flattened section 19 of a circumferential outer wall of the valve seat element 6 and the bore 15 extends from the respective flattened section 19. In other words, a space 20 is formed between the valve seat element 6 and the housing 2 in which the hydraulic fluid coming from the chamber 4 can spread before entering the bore 15. The flattened section extends in circumferential direction over more than twice the largest diameter of the bore 15.

The shock-valve operates as follows:
Hydraulic fluid entering the chamber 4 via the inlet 3 produces a hydraulic pressure in the chamber 4. This hydraulic pressure presses the valve seat element 6 against the step 14 in the housing 2 producing a sufficient tightness, so that a leakage through the shock-valve 1 is avoided. The biasing means 8 press the valve element 7 against the valve seat 12 of the valve seat element 6 so that the shock-valve 1 is closed. The fluid from the chamber 4 propagates through the bores 15 into the cavity 16. The pressure of the fluid in the cavity 16 acts on the valve element 7. When the force onto the valve element 7 exceeds the force produced by the biasing means 8, the valve element 7 is moved away from the valve seat 12 of the valve seat element 6 and the shock-valve opens until the pressure has been released to an acceptable magnitude. Thereafter, the biasing means 8 move the valve element 7 back to contact the valve seat 12.

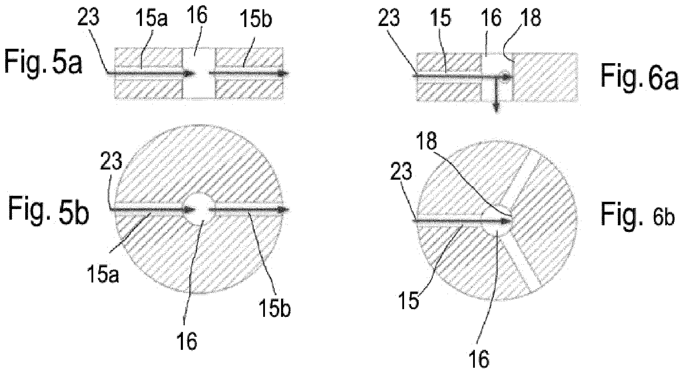

The technical effect of the odd number of flow paths is illustrated with reference to Fig. 5 and 6.

Fig. 5 shows the flow situation in a conventional shock-valve. Fig. 5a shows a sectional view corresponding to the line II-II of Fig. 1. Fig. 5b shows a view perpendicular to the view of Fig. 5a.

It can be seen that a flow 23 (shown as an arrow) passing bore 15a can directly enter an opposite bore 15b. When, on the other hand, a similar flow flows in opposite direction through bore 15b, this produces noise when these two flows meet.

Fig. 6 shows the situation in the shock-valve 1 according to the present invention. Fig. 6a shows a sectional view corresponding to the line II-II of Fig. 1. Fig. 6b shows a view perpendicular to the view of Fig. 6a. A flow 23 flowing through bore 15 cannot enter an opposite bore, but hits against a wall section 18 of the circumferential wall of the cavity 16. Thus, flows of different bores 15 do not meet each other in opposing directions, but always meet under an angle which dramatically reduces the noise produced.

Instead of the five bores 15 forming five flow channels, another odd number of flow channels can be used, for example three or seven flow channels. The flow through the bores 15 is forced to flow to the outlet in a more laminar manner.

## Claims

1. Shock-valve (1) comprising a housing (2) having an inlet (3) connected to a chamber (4) and an outlet, a valve seat section having a valve seat (12) and being arranged in the housing (2), a valve element (7) cooperating with the valve seat (12), and biasing means (8) acting on the valve element (7) in a direction towards the valve seat (12), wherein a channel arrangement extends from the chamber (4) to the valve seat (12), wherein the valve seat section is formed in a valve seat element (6) arranged between the inlet (3) and the outlet, **characterized in that** the channel arrangement forms an odd number of flow paths larger than two,
wherein the channel arrangement comprises a number of bores (15) in the valve seat element (6), wherein the flow paths extend through the bores (15), wherein the shock-valve (1) is configured such that fluid from the chamber (4) can propagate through the bores (15) into a cavity (16), wherein a pressure of the fluid in the cavity (16) acts on the valve element (7) and when a force onto the valve element (7) exceeds a force produced by the biasing means (8), the valve element (7) is moved away from the valve seat (12) of the valve seat element (6), wherein the shock-valve (1) opens until the pressure has been released to an acceptable magnitude, wherein the biasing means (8) move the valve element (7) back to contact the valve seat (12) thereafter.

2. Shock-valve (1) according to claim 1, **characterized in that** the number of flow paths is three, five, or seven.

3. Shock-valve (1) according to claim 1 or 2, **characterized in that** valve seat element (6) comprises the central cavity (16), wherein the valve seat (12) is formed at an edge of the cavity (16), and the flow paths open into the cavity (16).

4. Shock-valve (1) according to claim 3, **characterized in that** the cavity (16) comprises a central axis (17) and the flow paths are directed towards the central axis (17).

5. Shock-valve (1) according to claim 4, **characterized in that the** valve seat element (6) comprises an odd number of bores (15), distributed evenly in circumferential direction.

6. Shock-valve (1) according to any of claims 4 to 5, **characterized in that** a wall section (18) of the cavity (16) is arranged opposite to an opening of at least one flow path into the cavity (16).

7. Shock-valve (1) according to claim 6, **characterized in that** a wall section (18) of the cavity (16) is arranged opposite to each opening of the flow paths.

8. Shock-valve (1) according to any of claims 1 to 7, **characterized in that** the valve seat element (6) is allowed to rotate in the chamber.

9. Shock-valve (1) according to any of the preceding claims, **characterized in that** the valve seat element (6) comprises for each bore (15) a flattened section (19) in a circumferential outer wall of the valve seat element (6) and the bore (15) extends from the respective flattened section (19).

10. Shock-valve (1) according to claim 9, **characterized in that** in circumferential direction each flattened section (19) extends over more than twice the largest diameter of the respective channel.

11. Shock-valve (1) according to any of claims 1 to 10, **characterized in that** the valve seat element (6), the valve element (7) and the biasing means (8) form a unit (5) that can be handled together.

12. Shock-valve (1) according to claim 11, **characterized in that** the valve element (7) comprises a stem (9) penetrating the valve seat element (6).

13. Shock-valve (1) according to claim 12, **characterized in that** the stem (9) is guided through the cavity (16).

14. Shock-valve (1) according to any of the preceding claims, **characterized in that** the shock-valve (1) is configured such that hydraulic fluid entering the chamber (4) via the inlet (3) produces a hydraulic pressure in the chamber (4), wherein this hydraulic pressure presses the valve seat element (6) against a step (14) in the housing (2) producing a sufficient tightness, so that a leakage through the shock-valve (1) is avoided.

## Patentansprüche

1. Stoßdämpferventil (1), umfassend ein Gehäuse (2), das einen Einlass (3), der mit einer Kammer (4) verbunden ist, und einen Auslass aufweist, einen Ventilsitzabschnitt, der einen Ventilsitz (12) aufweist und in dem Gehäuse (2) angeordnet ist, ein Ventilelement (7), das mit dem Ventilsitz (12) zusammenwirkt, und eine Vorspannungseinrichtung (8), die in eine Richtung zum Ventilsitz (12) auf das Ventilelement (7) wirkt, wobei sich eine Kanalanordnung von der Kammer (4) zum Ventilsitz (12) erstreckt, wobei der Ventilsitzabschnitt in einem Ventilsitzelement (6) ausgebildet ist, das zwischen dem Einlass (3) und dem Auslass angeordnet ist, **dadurch gekennzeichnet, dass**
die Kanalanordnung eine ungerade Anzahl von Strömungsbahnen ausbildet, die größer ist als zwei, wobei die Kanalanordnung mehrere Bohrungen (15) in dem Ventilsitzelement (6) umfasst, wobei sich die Strömungsbahnen durch die Bohrungen (15) erstrecken, wobei das Stoßdämpferventil (1) derart ausgelegt ist, dass Fluid von der Kammer (4) durch die Bohrungen (15) in einen Hohlraum (16) strömen kann, wobei der Druck des Fluids im Hohlraum (16) auf das Ventilelement (7) wirkt und, wenn eine Kraft auf das Ventilelement (7) eine von der Vorspannungseinrichtung (8) erzeugte Kraft übersteigt, das Ventilelement (7) vom Ventilsitz (12) des Ventilsitzelements (6) weg bewegt wird, wobei sich das Stoßdämpferventil (1) öffnet, bis der Druck auf ein akzeptables Maß abgelassen wurde, wobei die Vorspannungseinrichtung (8) das Ventilelement (7) anschließend wieder in Kontakt mit dem Ventilsitz (12) bewegt.

2. Stoßdämpferventil (1) nach Anspruch 1, **dadurch gekennzeichnet, dass** die Anzahl der Strömungsbahnen drei, fünf oder sieben ist.

3. Stoßdämpferventil (1) nach Anspruch 1 oder 2, **dadurch gekennzeichnet, dass** das Ventilsitzelement (6) den mittigen Hohlraum (16) umfasst, wobei der Ventilsitz (12) an einer Kante des Hohlraums (16) ausgebildet ist und sich die Strömungsbahnen in den Hohlraum (16) öffnen.

4. Stoßdämpferventil (1) nach Anspruch 3, **dadurch gekennzeichnet, dass** der Hohlraum (16) eine Mittelachse (17) umfasst und die Strömungsbahnen zur Mittelachse (17) gerichtet sind.

5. Stoßdämpferventil (1) nach Anspruch 4, **dadurch gekennzeichnet, dass** das Ventilsitzelement (6) eine ungerade Anzahl Bohrungen (15) umfasst, die gleichmäßig in Umfangsrichtung verteilt sind.

6. Stoßdämpferventil (1) nach einem der Ansprüche 4 bis 5, **dadurch gekennzeichnet, dass** ein Wandabschnitt (18) des Hohlraums (16) einer Öffnung mindestens eines Strömungswegs in den Hohlraum (16) entgegengesetzt angeordnet ist.

7. Stoßdämpferventil (1) nach Anspruch 6, **dadurch gekennzeichnet, dass** ein Wandabschnitt (18) des Hohlraums (16) jeder Öffnung der Strömungsbahnen entgegengesetzt angeordnet ist.

8. Stoßdämpferventil (1) nach einem der Ansprüche 1 bis 7, **dadurch gekennzeichnet, dass** sich das Ventilsitzelement (6) in der Kammer drehen kann.

9. Stoßdämpferventil (1) nach einem der vorstehenden Ansprüche, **dadurch gekennzeichnet, dass** das Ventilsitzelement (6) für jede Bohrung (15) einen abgeflachten Abschnitt (19) in einer umlaufenden Außenwand des Ventilsitzelements (6) umfasst und sich die Bohrung (15) von dem jeweiligen abgeflachten Abschnitt (19) erstreckt.

10. Stoßdämpferventil (1) nach Anspruch 9, **dadurch gekennzeichnet, dass** sich jeder abgeflachte Abschnitt (19) in Umfangsrichtung über mehr als das Doppelte des größten Durchmessers des jeweiligen Kanals erstreckt.

11. Stoßdämpferventil (1) nach einem der Ansprüche 1 bis 10, **dadurch gekennzeichnet, dass** das Ventilsitzelement (6), das Ventilelement (7) und die Vorspannungseinrichtung (8) eine Einheit (5) ausbilden, die zusammen handhabbar ist.

12. Stoßdämpferventil (1) nach Anspruch 11, **dadurch gekennzeichnet, dass** das Ventilelement (7) einen Schaft (9) umfasst, der das Ventilsitzelement (6) durchdringt.

13. Stoßdämpferventil (1) nach Anspruch 12, **dadurch gekennzeichnet, dass** der Schaft (9) durch den Hohlraum (16) geführt wird.

14. Stoßdämpferventil (1) nach einem der vorstehenden Ansprüche, **dadurch gekennzeichnet, dass** das Stoßdämpferventil (1) derart ausgelegt ist, dass über den Einlass (3) in die Kammer (4) eintretendes Hydraulikfluid einen Hydraulikdruck in der Kammer (4) erzeugt, wobei dieser Hydraulikdruck das Ventilsitzelement (6) gegen eine Stufe (14) im Gehäuse (2) drückt, wodurch eine ausreichende Dichtigkeit erzeugt wird, sodass ein Lecken durch das Stoßdämpferventil (1) verhindert wird.

## Revendications

1. Soupape antichoc (1) comprenant un logement (2) ayant une entrée (3) raccordée à une chambre (4) et une sortie, une section de siège de soupape ayant un siège de soupape (12) et étant agencée dans le logement (2), un élément de soupape (7) coopérant avec le siège de soupape (12), et des moyens de sollicitation (8) agissant sur l'élément de soupape (7) dans une direction vers le siège de soupape (12), dans laquelle un agencement de canal s'étend depuis la chambre (4) jusqu'au siège de soupape (12), dans laquelle la section de siège de soupape est formée dans un élément de siège de soupape (6) agencé entre l'entrée (3) et la sortie, **caractérisée en ce que**
l'agencement de canal forme un nombre impair de chemins d'écoulement supérieur à deux,
dans laquelle l'agencement de canal comprend un nombre d'alésages (15) dans l'élément de siège de soupape (6), dans laquelle les chemins d'écoulement s'étendent à travers les alésages (15), dans laquelle la soupape antichoc (1) est configurée de manière telle qu'un fluide provenant de la chambre (4) peut se propager à travers les alésages (15) jusque dans une cavité (16), dans laquelle une pression du fluide dans la cavité (16) agit sur l'élément de soupape (7) et, lorsqu'une force sur l'élément de soupape (7) dépasse une force produite par les moyens de sollicitation (8), l'élément de soupape (7) est déplacé en éloignement du siège de soupape (12) de l'élément de siège de soupape (6), dans laquelle la soupape antichoc (1) s'ouvre jusqu'à ce que la pression ait été libérée dans une amplitude acceptable, dans laquelle les moyens de sollicitation (8) déplacent l'élément de soupape (7) de retour pour qu'il entre en contact avec le siège de soupape (12) après cela.

2. Soupape antichoc (1) selon la revendication 1, **caractérisée en ce que** le nombre de chemins d'écoulement est de trois, de cinq, ou de sept.

3. Soupape antichoc (1) selon la revendication 1 ou 2, **caractérisée en ce que** l'élément de siège de soupape (6) comprend la cavité centrale (16), dans laquelle le siège de soupape (12) est formé à un bord de la cavité (16), et les chemins d'écoulement s'ouvrent dans la cavité (16).

4. Soupape antichoc (1) selon la revendication 3, **caractérisée en ce que** la cavité (16) comprend un axe central (17) et les chemins d'écoulement sont dirigés vers l'axe central (17).

5. Soupape antichoc (1) selon la revendication 4, **caractérisée en ce que** l'élément de siège de soupape (6) comprend un nombre impair d'alésages (15), distribués uniformément dans une direction circonférentielle.

6. Soupape antichoc (1) selon de quelconques des revendications 4 et 5, **caractérisée en ce qu'**une section de paroi (18) de la cavité (16) est agencée de façon opposée à une ouverture d'au moins un chemin d'écoulement donnant dans la cavité (16).

7. Soupape antichoc (1) selon la revendication 6, **caractérisée en ce qu'**une section de paroi (18) de la cavité (16) est agencée de façon opposée à chaque ouverture des chemins d'écoulement.

8. Soupape antichoc (1) selon de quelconques des revendications 1 à 7, **caractérisée en ce que** l'élément de siège de soupape (6) peut tourner dans la chambre.

9. Soupape antichoc (1) selon de quelconques des revendications précédentes, **caractérisée en ce que** l'élément de siège de soupape (6) comprend, pour chaque alésage, (15) une section aplatie (19) dans une paroi extérieure circonférentielle de l'élément de siège de soupape (6) et l'alésage (15) s'étend depuis la section aplatie respective (19).

10. Soupape antichoc (1) selon la revendication 9, **caractérisée en ce que**, dans la direction circonférentielle, chaque section aplatie (19) s'étend sur plus de deux fois le diamètre le plus grand du canal respectif.

11. Soupape antichoc (1) selon de quelconques des revendications 1 à 10, **caractérisée en ce que** l'élément de siège de soupape (6), l'élément de soupape (7), et les moyens de sollicitation (8) forment une unité (5) qui peut être manipulée en bloc.

12. Soupape antichoc (1) selon la revendication 11, **caractérisée en ce que** l'élément de soupape (7) comprend une tige (9) pénétrant dans l'élément de siège de soupape (6).

13. Soupape antichoc (1) selon la revendication 12, **caractérisée en ce que** la tige (9) est guidée à travers la cavité (16).

14. Soupape antichoc (1) selon de quelconques des revendications précédentes, **caractérisée en ce que** la soupape antichoc (1) est configurée de manière telle qu'un fluide hydraulique entrant dans la chambre (4) par l'intermédiaire de l'entrée (3) produit une pression hydraulique dans la chambre (4), dans laquelle cette pression hydraulique presse l'élément de siège de soupape (6) contre un épaulement (14) dans le logement (2), produisant une étanchéité suffisante, de telle sorte qu'une fuite à travers la soupape antichoc (1) est évitée.
